Europäisches Patentamt

(19) European Patent Office

Office européen des brevets

(11) Numéro de publication: **0 082 772**
**B1**

(12) **FASCICULE DE BREVET EUROPÉEN**

(45) Date de publication du fascicule du brevet:
13.08.86

(21) Numéro de dépôt: **82402308.9**

(22) Date de dépôt: **15.12.82**

(51) Int. Cl.⁴: **G 01 B 7/12,** G 01 D 5/246,
G 01 D 3/04, G 01 D 5/20,
G 01 B 7/28, E 21 B 47/08,
E 21 B 47/12

(54) **Dispositif pour la mesure de dimensions internes d'un tube, notamment dans un puits.**

(30) Priorité: **23.12.81 FR 8124179**

(43) Date de publication de la demande:
**29.06.83 Bulletin 83/26**

(45) Mention de la délivrance du brevet:
**13.08.86 Bulletin 86/33**

(84) Etats contractants désignés:
**DE GB IT NL**

(56) Documents cité:
**DE-A-2 852 637
FR-A-2 075 778
FR-A-2 420 739
FR-A-2 468 103
US-A-2 908 085
US-A-4 186 494**

(73) Titulaire: **FLOPETROL SERVICES INC.,, 81,
Piccadilly, London W1C 9HF (GB)**

(72) Inventeur: **Beseme, Jean Henri, 3, rue du Général
de Gaulle, F-77250 Veneux- les- Sablons (FR)**
Inventeur: **Corral, José Romain, 44, allée de
Beaudédit Vaux- le- Penil, F-77000 Melun (FR)**
Inventeur: **Glotin, Bernard Jean- Pierre, 78, avenue
du Bois Guimier, F-94100 Saint- Maur (FR)**

(74) Mandataire: **Netter, André, Cabinet NETTER 40,
rue Vignon, F-75009 Paris (FR)**

## Description

La présente invention est relative à la mesure des déplacements et vise notamment les outils destinés à la mesure des dimensions internes de tubes, notamment dans un but de vérification de leur état.

Il existe de nombreuses installations dans lesquelles des tubes en acier sont soumis à l'action d'agents abrasifs ou corrosifs qui provoquent à la longue une détérioration de leur surface interne de nature à les rendre impropres à l'utilisation. Tel est notamment le cas dans les puits de pétrole, de gaz ou de géothermie, dont la paroi intérieure est revêtue d'un tubage en acier, et à l'intérieur desquels est suspendue une colonne de production qui relie une couche productrice à la surface afin d'amener les fluides produits à cette dernière.

On connaît des sondes équipées de palpeurs, aussi appelées diamétreurs ou sondes de diamétrage, qui sont propres à être déplacées dans un train de tubes à contrôler et sont équipées de palpeurs sollicités contre la paroi du tube dont on relève les veriations d'écartement au fur et à mesure du déplacement de la sonde.

Il existe à cet effet des dispositifs d'enregistrement mécaniques, dans lesquels le mouvement, en général pivotant, des palpeurs est enregistré sur un cylindre entraîné en rotation en fonction du déplacement de la sonde à l'intérieur du tube. Ces dispositifs présentent l'inconvénient d'une complexité mécanique assez grande pour une précision relativement faible, et nécessitent en outre des manipulations relativement délicates pour la mise en place et le retrait du cylindre d'enregistrement.

On connaît également, par exemple par US-A-4 186 494 (Peruchon et al), des sondes dans lesquelles le mouvement de chaque palpeur au contact avec la paroi interne du tube est converti par un capteur en une grandeur électrique qui peut être transmise à distance, par exemple à l'aide d'un conducteur électrique dans un câble auquel elle peut être suspendue.

Un tel capteur est constitué par une ou plusieurs bobines à l'intérieur desquelles se déplace un noyau en matériau à forte perméabilité magnétique selon un mouvement linéaire fonction du déplacement du palpeur respectif au contact de la paroi du tube.

Cependant, un tel capteur est encombrant et il n'est pas possible de disposer un nombre de palpeurs aussi grand qu'il serait souhaitable autour de la sonde en raison du manque d'espace pour les capteurs correspondants à l'intérieur de cette dernière. Sur le plan opératoire, ces dispositifs se prêtent mal à la réalisation de mesures séquentielles, cependant souhaitables dans le cas où ces mesures doivent être transmises en série sur un câble. Le temps de stabilisation d'un circuit de mesure après qu'il a été connecté à une bobine à la suite d'une commutation est en effet en général relativement élevé. Ce facteur limite la fréquence d'échantillonnage des capteurs de déplacement associés à chaque palpeur. La vitesse de déplacement de la sonde à l'intérieur du tube s'en trouve donc ralentie. Si l'on désire, pour éviter cet inconvénient, mesurer les déplacements captés par chaque bobine en continu, il est alors nécessaire de prévoir un circuit de mesure particulier, comprenant notamment un oscillateur, pour chaque bobine, les sorties de ces circuits étant interrogées séquentiellement par un multiplexeur en vue de leur transmission. Cette solution est non seulement relativement coûteuse, mais elle augmente en outre l'encombrement des circuits de mesure. Les dispositifs de capteurs de déplacement utilisés dans l'art antérieur sont souvent en outre mal adaptés à la réalisation de mesures précises lorsque la température varie dans des proportions importantes, ce qui est le cas notamment à l'intérieur des puits de pétrole.

Sur le plan mécanique, enfin, les dispositifs de diamétreurs antérieurs à capteurs électromagnétiques sont mal adaptés aux pressions élevées, soit en raison de la difficulté de réaliser les passages étanches vers l'électronique de traitement des très nombreux conducteurs électriques nécessaires lorsque les bobines de mesure sont soumises à la pression extérieure à la sonde, soit dans le cas contraire, en raison de la nécessité de prévoir des joints d'étanchéité de réalisation délicate entre chaque palpeur et le noyau magnétique du capteur correspondant.

Le dispositif connu par US-A-2 908 085 ne supprime qu'une partie des inconvénients ci-dessus.

L'invention vise un dispositif conforme à la revendication 1.

On peut noter qu'un tube borgne monté de façon étanche pour un capteur de déplacement est déjà connu par FR-A-2 075 778, mais dans un contexte et dans un domaine technique très différents de ceux de l'invention.

Des caractéristiques préférées de l'invention sont données dans les revendications 2 et suivantes.

L'invention sera mieux comprise à la lumière de la description détaillée donnée ci-après d'un exemple de réalisation non limitatif en référence aux dessins annexés, sur lesquels:

la figure 1 représente une sonde de diamétreur dans un puits vu en coupe longitudinale;

la figure 2 représente une vue en élévation d'une telle sonde;

la figure 3 représente une vue en coupe longitudinale d'une partie de la sonde de la figure 2;

les figures 4 et 5 sont des vues en coupe longitudinale de portions agrandies de la figure 3, la figure 5 venant se placer au-dessous de la figure 4;

la figure 6 est une vue d'un détail de la figure 5 selon un plan de coupe longitudinale perpendiculaire à celui de la figure 5;

la figure 7 est une vue de dessous d'un élément de barillet illustré en coupe à la figure 3;

la figure 8 est un schéma de circuit utilisé pour un capteur de déplacement mis en oeuvre dans la sonde des figures précédentes;

les figures 9 et 10 sont des diagrammes de signaux en fonction du temps utilisés dans les explications du fonctionnement du circuit de la figure 8;

la figure 11 est une représentation schématique de l'agencement des circuits de mesure de l'ensemble des

2

capteurs de la sonde des figures précédentes.

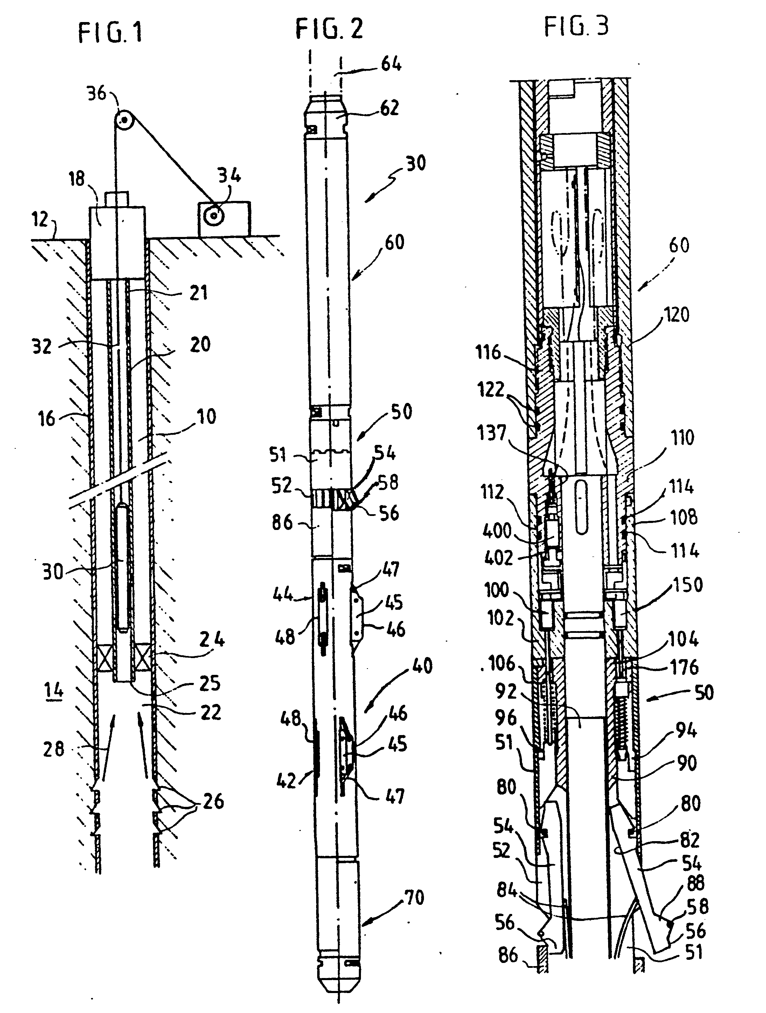

Un puits de pétrole (figure 1) 10 pénètre depuis la surface du sol 12 à travers des formations géologiques 14. Il est limité par un tubage en acier 16 qui permet de consolider les parois du puits. A la surface, le puits est fermé par une tête de puits 18 dont dépend l'extrémité supérieure d'une colonne de production 21 de diamètre inférieur à celui du tubage et qui descend à l'intérieur de celui-ci jusqu'à une zone 22 délimitée à sa partie supérieure par un bouchon annulaire ou packer 24 entre l'extrémité inférieure 25 de la colonne de production 20 et le tubage 16. La colonne de production 20 permet de remonter à la surface des fluides produits dans la partie du puits 22 grâce à des perforations telles que 26 dans la paroi du tubage. Les fluides qui progressent selon un trajet ascendant schématisé par les flèches 28 peuvent entraîner avec eux du sable ou des particules abrasives. En outre, ils sont susceptibles de contenir des composés chimiques de nature à attaquer l'acier des tubes composant le tubage 16 et la colonne de production 20. Ceux-ci sont donc soumis à des phénomènes de corrosion qui peuvent, à long terme, en affecter l'efficacité. Il importe donc de surveiller l'état de ces tubes. A cet effet, on peut mesurer leurs diamètres à l'aide d'une sonde de diamétreur 30 que l'on descend à l'intérieur du puits, 10, à travers la colonne de production 20, à l'extrémité d'un câble 32 qui est déroulé à partir d'un treuil 34 à la surface en passant par une poulie de renvoi 36 à la verticale du puits. Ce câble assure non seulement la sustentation mécanique de la sonde, mais également le transfert d'informations électriques, notamment de mesures, entre la sonde et la surface ainsi que l'alimentation des circuits électriques équipant la sonde.

La sonde 30 (figure 2) comprend un corps allongé dont le diamètre est adapté à la dimension soit des tubages 16, soit des colonnes de production dans lesquelles la sonde 30 doit être amené à effectuer des mesures, ou qu'elle doit traverser pour parvenir dans le zone du puits située en dessous du bouchon ou packer 24.

Une sonde 30, décrite ici à titre d'exemple, comprend quatre modules longitudinaux connectés les uns à l'extrémité des autres: un module de guidage 40, un module de diamétrage proprement dit 50 disposé, dans la position fonctionnelle de la sonde dans un puits, au-dessus du module 40, une cartouche 60 enfermant les circuits électroniques nécessaires au fonctionnement de la sonde et qui est propre à être connectée à son extrémité supérieure 62 à une tête de sonde 64 équipée d'un moyen d'attache du câble 32. La partie inférieure 42 du module de guïdage est reliée à un module de déclenchement du câble 32.

Le module 40 est équipé de deux étages, respectivement 42 et 44, de trois patins de centralisation rétractables. Chaque étage comporte trois patins 45 uniformément répartis autour du corps cylindrique du module 40, les patins de l'étage 42 étant disposés selon des génératrices de ce corps intercalées avec les génératrices des patins de l'étage 44. Les patins 45 sont présents sur la partie droite de la figure 2 dans une position d'ouverture dans laquelle leur surface externe 46 est propre à venir en appui contre la paroi du tube dans lequel est déplacée la sonde, par exemple la paroi de la colonne de production 20, de façon à maintenir la sonde dans une position aussi rigoureusement centrée que possible par rapport à l'axe de la colonne 20. Les faces 46 sont allongées de façon à pouvoir se déplacer en frottant le long de génératrices de la colonne 20 lorsque l'outil est déplacé dans celle-ci. Les patins 45 sont montés à l'extrémité de biellettes 47 articulées à l'intérieur du corps du module 40 dans des ouvertures allongées 48 à l'intérieur desquelles les patins 45 sont rétractables dans une position illustrée sur la moitié gauche de la figure 2. Des moyens de sollicitation élastique non représentés permettent d'appliquer les patins 45 lorsque ces derniers sont sortis de leurs logements 48 en position opérationnelle, avec une force réglable, contre la paroi du tube dans lequel est utilisée la sonde. Lorsque la sonde est introduite dans le tube à contrôler, les patins 45 sont en position rétractée dans leur logement. Ils peuvent être relâchés dans leur position opérationnelle pour centrer la sonde à l'intérieur de ce tube en reponse à un signal électrique qui commande le module de déclenchement 70 selon une réalisation courante.

La tête de diamétreur 50 comprend une série d'ouvertures rectangulaires 52 uniformément réparties autour du corps cylindrique de cette tête 50, à l'intérieur desquelles sont logés des palpeurs respectifs 54 propres à occuper deux positions, l'une rétractée à l'intérieur des ouvertures 52, comme représenté par la partie gauche de la figure 2, et l'autre en extension, comme représenté sur la partie droite de la figure 2. Dans cette dernière position l'extrémité inférieure 56 de chacun de ces palpeurs tend à s'écarter du corps de la sonde pour permettre à un grain 58 de venir en contact avec la paroi du tube à l'intérieur duquel la sonde est centrée par le module 40.

La figure 3 montre, de manière plus détaillée, la constitution de la tête de diamétreur 50 et une partie de la cartouche électronique 60 à sa partie supérieure.

Chaque palpeur 54 est composé d'un bras métallique allongé qui est articulé par rapport au corps de diamétreur 51 autour d'un axe 80 de façon à pouvoir pivoter dans un plan diamétral longitudinal à partir d'une position rentrée à l'intérieur des alvéoles ou ouvertures 52, dans laquelle un fourreau 86, monté coulissant longitudinalement autour du corps de diamétreur 50 à la partie inférieure de celui-ci, maintient l'extrémité inférieure 56 du bras 54 contre la pression exercée par une lame-ressort 84 sur la face dorsale 82 du palpeur en un point intermédiaire entre cette extrémité 56 et l'axe d'articulation 80. Dans la position ouverte, le fourreau 86 est effacé par coulissement vers le bas de façon à libérer l'extrémité 56 du bras 54 qui tend à être chassée vers l'extérieur par l'action du ressort 84 en pivotant autour de l'axe 80. Immédiatement au-dessus de son extrémité inférieure 56, le bras palpeur 54 présente un bec triangulaire 88 faisant saillie vers l'extérieur de la sonde et portant à son extrémité le grain 58. Celui-ci est constitué en un matériau relativement dur afin de résister à l'usure due aux frottements contre la paroi interne du tube dans lequel est engagée la sonde 30. Lorsque celle-ci est introduite dans ce tube, par exemple la colonne de production 20, les seize palpeurs 54 sont maintenus dans la position rétractée à l'intérieur de leurs alvéoles 52 respectives par la lèvre supérieure du fourreau 86. Au début de la mesure, celui-ci est déplacé vers le bas sous la commande du module de déclenchement 70 par une tringlerie non représentée, en même temps que les patins de centrage 45 sont chassés vers l'extérieur. A partir de ce moment, chacun des palpeurs 54 entre en butée, par son grain de contact 58, avec une génératrice respective du tube à tester, la position radiale de ce grain étant fonction du rayon du tube sur la génératrice de contact au niveau du point de contact. L'angle de pivotement du palpeur 54 varie avec les variations de ce rayon dues notamment à l'usure ou à la corrosion interne plus ou moins grande du tube dans lequel est déplacée la sonde. L'ensemble des grains de contact 58 des seize palpeurs 54 reste sensiblement dans un même plan perpendiculaire à l'axe de la sonde 30 en raison de l'angle d'ouverture relativement faible du bras palpeur 54 par rapport à la direction longitudinale, y compris dans sa position d'écartement maximal, et de l'amplitude relativement petite des variations de la position radiale des extrémités des palpeurs fournissant les mesures.

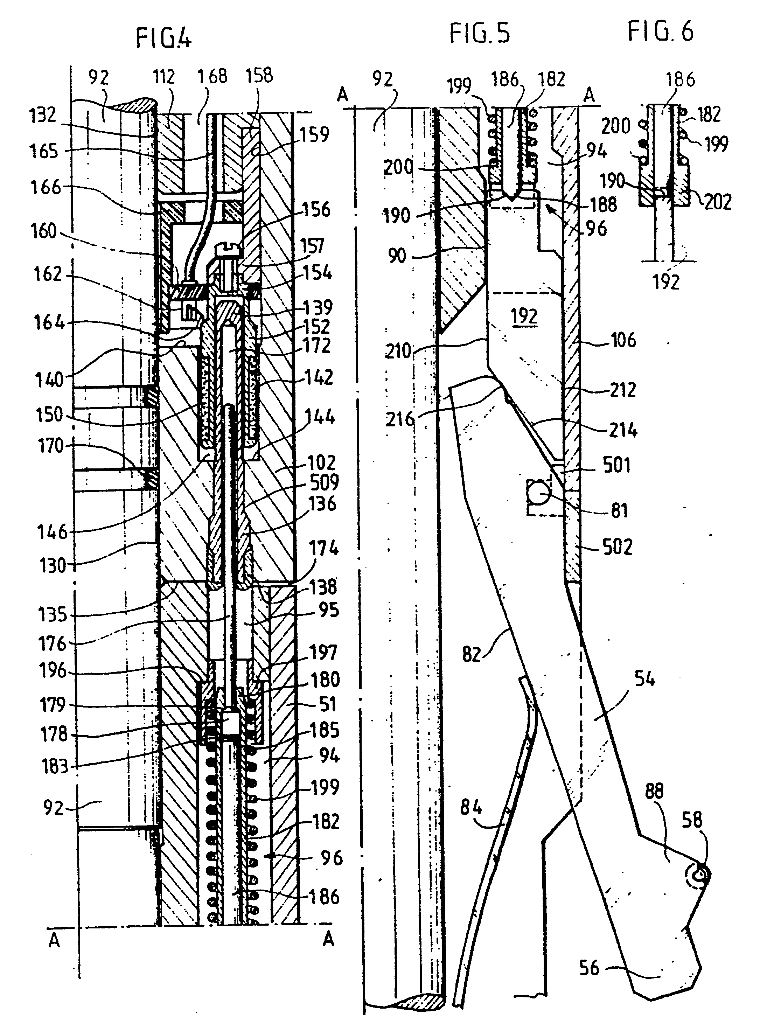

On décrit maintenant l'organisation générale du dispositif de mesure des déplacements des palpeurs 54 en relation à la figure 3. Les explications seront reprises plus en detail ensuite en référence aux figures 4 à 6.

Le corps de diamétreur 51 est composé d'une pièce longitudinale tubulaire 90 à l'intérieur de laquelle est monté un tirant central cylindrique fixe 92. La pièce 90 a un profil extérieur étoilé, en section transversale, de façon à ménager, en correspondance de chaque palpeur et au-dessus de ce dernier, un canal longitudinal 94 à l'intérieur duquel est montée coulissante une tringlerie effectuant la conversion du mouvement pivotant des palpeurs en un déplacement longitudinal et la transmission de ces déplacements vers une série de seize capteurs de déplacement électromagnétiques 100 montés dans une pièce en forme de barillet 102 fixée au sommet 104 du corps 90 par des moyens non représentés. Les canaux 94 sont séparés de l'extérieur de la sonde par une chemise ou enveloppe tubulaire 106 montée autour de la pièce 90 et formant la paroi externe du corps de diamétreur 51. A sa partie supérieure tubulaire 108, le corps de barillet 102 est relié à une pièce de connexion 110 comportant une terminaison inférieure 112 mâle pénétrant à l'intérieur de cette partie 108 avec laquelle elle est en liaison de contact étanche par l'intermédiaire de deux joints toriques 114. La pièce de connexion 110 comprend également une partie mâle supérieure 116 qui pénètre à l'intérieur d'une gaine tubulaire 120 délimitant la cartouche électronique 60, deux joints toriques 122 étant également prévus pour assurer l'étanchéité de cette liaison.

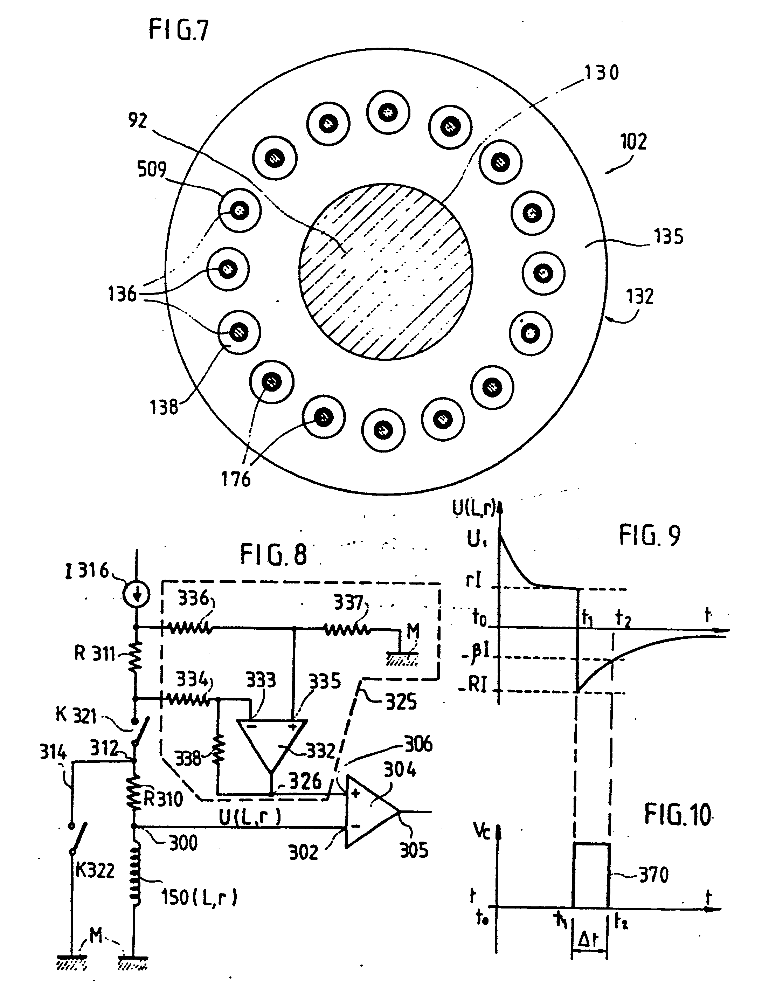

On se reportera maintenant à la figure 4. Le barillet 102 est percé d'un trou central 130 dans lequel passe le tirant 92, ce dernier se prolongeant dans un passage 132 à l'intérieur de la pièce de connexion 110. La face inférieure 135 du barillet 102 se présente sous la forme d'une couronne annulaire (figure 7) percée de seize trous longitudinaux 509 dans chacun desquels est emmanché un tube borgne 136 dont l'extrémité inférieure s'ouvre dans la face 135, l'autre extrémité 139 du tube 136 étant fermée (figure 4). Le perçage interne 130 du barillet 102 s'élargit vers sa partie supérieure pour définir un épaulement annulaire 140 perpendiculaire à l'axe de la sonde et tourné vers le haut dans lequel débouchent seize perçages cylindriques 142 au fond 144 de chacun desquels débouche un tube borgne 136 respectif. Un alvéole annulaire 146 est ménagé entre la paroi latérale externe de la partie supérieure de chaque tube 136 et la paroi latérale interne des perçages 142. A l'intérieur de cet espace annulaire est montée (figure 4) une bobine d'induction 150 constituée par un bobinage de 1300 spires (par exemple) sur une carcasse tubulaire 152 dont la partie supérieure 154 vient coiffer l'extrémité borgne 139 du tube borgne ou doigt de gant 136. Cette partie supérieure 154 de la carcasse 152 est maintenue à l'aide d'une vis de fixation 156 dans un rebord interne 157 à l'extrémité inférieure d'une pièce de support cylindrique 158 logée contre la paroi interne du barillet 102 dans sa partie élargie 159.

Sur la face inférieure du rebord annulaire 157, est accolé un plateau annulaire 160 en matière isolante dans lequel sont montées seize bornes de connexion 162. A chacune de ces bornes est raccordée l'une des extrémités 164 du bobinage 150, l'autre extrémité de ce bobinage étant connectée à la masse. A sa partie supérieure, chacune des bornes 162 est raccordée à un fil de liaison 165 traversant une ouverture à l'intérieur d'un manchon isolant 166 disposé autour du tirant central 92 et supporté par le bord interne du plateau annulaire 160. Le fil de liaison isolé 165 traverse ensuite un canal longitudinal 168 ménagé à l'extrémité inférieure de la terminaison mâle 112 de la pièce de connexion 110. Ce canal assure la protection du fil 168 jusqu'à la cartouche électronique 60.

La carcasse 152 de la bobine 150 est réalisée en un matériau non magnétique tel que le titane. Le tube borgne ou doigt de gant 136 est également réalisé en un matériau non magnétique, par exemple de l'inconel. Il est brasé en 138 de manière étanche au corps de barillet 102 de façon à empêcher toute infiltration de liquide même à des pressions très élevées entre ce tube et l'alvéole annulaire 146 à l'intérieur duquel est logée la bobine 150, les épanouissements de la brasure 138 autour de l'ouverture du tube étant normalement soumis à la pression interne du puits, comme il est expliqué ci-après. Le corps du barillet 102 est réalisé en acier inoxydable magnétique. La bobine 150 est ainsi toute entière logée dans l'alvéole 146 et complètement isolée magnétiquement par le corps 102 des bobines voisines. La partie supérieure du plateau 140 et les alvéoles 146 sont soustraits à la pression régnant sur la face inférieure en forme de couronne 135 de ce barillet par deux joints toriques 170.

L'espace intérieur 172 du tube borgne 136 est soumis par l'ouverture inférieure de celui-ci à la pression extérieure à la sonde. Le canal interne 94 dans lequel est montée la tringlerie de transmission 96 associée à chaque palpeur 54 est en effet relié à l'extérieur, d'une part, à sa partie inférieure par l'ouverture 52 correspondante et, d'autre part, à sa partie supérieure par un intervalle étroit 174 ménagé entre la partie supérieure de l'enveloppe 51 et la face inférieure 135 du barillet 102.

A l'intérieur de chaque tube borgne 136 est monté, longitudinalement mobile, un barreau allongé 176 en un matériau magnétique à forte perméabilité formant le noyau à position variable du capteur 100. Dans l'exemple ici décrit, ce noyau est réalisé en un alliage de nickel massif vendu sous l'appellation d'anister D par les aciéries d'Imphy. Il présente l'avantage de garder ses propriétés magnétiques intégralement quelle que soit la pression externe à laquelle il est soumis, contrairement à des matériaux à base de ferrite ou à structure feuilletée. La barreau 176, dans cet exemple, a un diamètre d'environ 1,60 millimètre. Sa longueur est 40 millimètres.

L'extrémité inférieure du barreau 176 est reliée au bras palpeur 54 respectif par la tringlerie de transmission 96

qui assure une correspondance bidirectionnelle entre les déplacements angulaires de ce bras autour de son axe de pivotement 81 et les déplacements linéaires de l'extrémité du barreau 176 à l'intérieur de la bobine 150. La transmission 96 assure en outre ces déplacements en évitant de soumettre le barreau 176 à toute contrainte de flexion ou de torsion par les moyens qui sont décrits ci-après.

A cet effet, l'extrémité inférieure du barreau 176 présente un renflement 178 relié au barreau proprement dit par une surface de transition en forme de couronne sphérique 179 formant une portion d'olive contre laquelle vient s'appliquer la surface inférieure d'un épaississement interne à l'extrémité 180 d'un tube ou pompe 182 de façon à pouvoir exercer, par cette dernière, des efforts de traction tendant à faire sortir le barreau 176 du tube 136, sans pouvoir lui imprimer de poussée en sens inverse.

La base ou face inférieure 183 du renflement 178 est arrondie et en contact avec une face supérieure arrondie 185 d'une tige-pointeau 186 montée à l'intérieur de la pompe 182. L'extrémité 188 de la tige-pointeau 186 (figure 5) est biseautée et vient se loger dans une encoche de section triangulaire (voir également figure 6) 190 ménagée dans la face supérieure d'une pièce en forme de coin 192 guidée à coulissement à l'intérieur du canal 94. Un épaulement 196 est formé dans ce canal contre lequel vient s'appliquer de bas en haut une douille 197 à l'intérieur de laquelle est logée l'extrémité supérieure 180 de la pompe et qui a une butée supérieure pour un ressort hélicoïdal 199 monté autour de la pompe 182 (figure 4) et dont l'extrémité inférieure (figure 5) vient en appui contre un épaulement 200 à la partie inférieure de la pompe 182. Le ressort 199 travaille en compression pour exercer, par réaction contre la douille 197, une force tirant le barreau 176 par l'intermédiaire de la pompe 182 contre la tige-pointeau 186.

L'extrémité inférieure 202 de là pompe 182 forme une chape (figure 6) encadrant l'extrémité 188 du pointeau 186 et le sommet de la pièce en forme de coin 192.

La pièce 192 est guidée longitudinalement à coulissement entre le corps 90 et l'enveloppe 106 (figure 5) par deux faces parallèles 210 et 212 raccordées par une face oblique 214 qui s'éloigne de l'axe de la sonde vers le bas. Contre cette face 214 vient buter la tête 216 du bras palpeur à l'extrémité supérieure de celui-ci, au-dessus de l'axe de pivotement 81, lequel prend appui dans un coussinet 501, rendu solidaire du corps 51, une bague de rétention 502 à la base de cette enveloppe limitant la course de pivotement du doigt 54.

Ainsi, en fonctionnement, lorsque la libération des palpeurs a été déclenchée, tous les bras 54 sont appliqués par les ressorts 84 correspondants contre la paroi interne du tube à tester à l'intérieur duquel est déplacée la sonde 30. Celle-ci est maintenue dans une position centrée par rapport à l'axe de ce tube par le module de centrage 40. En conséquence, les seuls mouvements de pivotement possibles pour les bras palpeurs 54 sont dûs à des variations du rayon interne du tube testé en fonction d'inégalités de surface qui peuvent être dûes à des phénomènes d'usure et de corrosion divers. Les déplacements radiaux des grains de palpeurs 58 sont transmis à la tête 216 de chaque bras 54 et, par le glissement de cette dernière contre la face oblique 214 des coins 192, transformés en un mouvement longitudinal de ces coins qui est transmis, sans jeu, par le système de pointeau et de pompe décrit précédemment au noyau ou barreau magnétique 176. La self-inductance de la bobine 150 varie en fonction de l'enfoncement du barreau 176 dans son espace interne. La mesure de cette self-inductance est effectuée en déterminant une caractéristique électrique d'un circuit dans lequel est connectée cette bobine, comme il sera expliqué ci-après. Cette mesure permet de relever avec précision les variations de la position du barreau 176 à l'intérieur de la bobine en fonction des déplacements des doigts palpeurs 54 au cours du cheminement de la sonde.

La bobine 150 est entièrement soustraite à l'action de la pression régnant à l'intérieur de la colonne de production (cette pression pouvant varier dans des proportions considérables avec là profondeur de la sonde) grâce aux joints toriques 170 sur le tirant 92 et surtout au fait que son espace interne est isolé de l'environnement dans lequel se meut le barreau 176 par le tube borgne 136 monté comme un doigt de gant sur le barillet 102.

Les caractéristiques magnétiques du barreau 176 ne sont pas sensibles à la pression à laquelle il est soumis à l'intérieur de la cavité 172 du tube borgne 136 et dans l'espace 95 au-dessus du canal 94. Avantageusement, cet espace 95 est rempli d'une graisse, les intervalles 174 permettant le déplacement du barreau 176 et de la tringlerie 96 sans créer d'effet de surpression tendant à s'opposer à la pénétration du barreau 176 dans la bobine 150.

Grâce à son montage particulier, le barreau 176 n'est soumis à aucun effort de flexion ou de torsion.

Dans la sonde présentement décrite dont le diamètre en position de fermeture des palpeurs est 54 millimètres, chacun des seize palpeurs peut se déplacer dans une plage de variation comprise par exemple entre 0 et 14 millimètres environ. Ce domaine de variation est effectif pour des contrôles de tuyaux, tels que les colonnes de production ou des tubages de puits de pétrole par exemple dont le diamètre varie entre 59 et 82 millimètres. La course totale du barreau 176 entre la position dans laquelle il est entièrement rentré à l'intérieur de la bobine lorsque le bras palpeur 54 est entièrement rétracté dans l'ouverture correspondante 52 d'une part, et la position d'extension maximale du palpeur est dans cet exemple d'environ 7 millimètres.

La relation entre les déplacements dans la direction radiale du grain 58 de chaque palpeur et les déplacements longitudinaux correspondants des barreaux 176 est linéaire à 1,5 en %.

L'outil peut être utilisé dans des environnements dont la pression peut atteindre des valeurs de 700 bars. Par des moyens qui vont être explicités ci-après, on détecte les déplacements du barreau magnétique 176 avec une précision supérieure à 0,5 millimètre sur le rayon et une résolution inférieure à 0,1 millimètre.

On décrit maintenant, en référence aux figures 8 à 11, la constitution d'un circuit de mesure du déplacement du barreau 176 à l'intérieur de la bobine 150.

Le circuit permet d'obtenir 200 points de mesure numériques sur la plage de variation de la position des

**0 082 772**

palpeurs préceédemment indiquée, soit environ 0,075 millimètre d'écart de rayon entre deux valeurs numériques successives fournies à la sortie de ce dispositif. Les signaux de sortie numériques sont des fonctions linéaires de la variation du rayon palpé avec une précision meilleure que 1% sur environ 70% de cette plage et ceci pour des températures qui peuvent varier de 15°C à 150° ou voire même 175°C au fond d'un puits de pétrole.

Chaque bobine 150 (figure 8) d'un capteur 100 est montée électriquement entre la masse M de la sonde (masse de la carcasse métallique 152) et une jonction 300 à laquelle elle est connectée par la liaison 165 précédemment décrite et qui est connectée à une entrée 302 d'un comparateur 304, laquelle reçoit un signal U(L, r) dans lequel U est une tension, L la self-inductance de la bobine 150 et r, une résistance comprenant la résistance propre de la bobine 150 et une résistance équivalente aux pertes engendrées dans le barreau magnétique 176 par courants de Foucault.

En série avec la bobine 150 est connectée une résistance de charge R 310 de résistance R entre la jonction 300 et une jonction 312 qui est reliée, d'une part, à la masse M par une liaison 314 à travers un commutateur K 322 représenté schématiquement comme un contact mécanique mais qui, en pratique, peut être réalisé par un circuit de commutation statique par des moyens bien connus. La jonction 312 est par ailleurs reliée à un générateur de courant constant I 316 par l'intermédiaire d'une résistance R 311 de valeur $R_1$ qui développe entre ses bornes une tension $v$ égale $R_1 \times I$, I étant le courant produit par le générateur à courant constant I 316. Entre la résistance 311 et la jonction 312 est prévu un commutateur K 321.

La tension $v$ prélevée aux bornes de la résistance R 311 est appliquée à l'entrée d'un montage amplificateur multiplicateur 325 dont la sortie 326 est connectée à la deuxième entrée 306 du comparateur 304 pour y appliquer un signal de tension $\beta$ I, $\beta$ étant un coefficient de proportionalité fixé par le gain du montage amplificateur 325. Celui-ci est réalisé de façon classique à l'aide d'un amplificateur différentiel 332 dont une entrée 333 est connectée à l'une des bornes de la résistance R 311 à travers une résistance 334 et l'autre entrée 335 est connectée à un diviseur de tension formé par des résistances 336 et 337 entre l'autre borne de la résistance R 311 et la masse, le rapport d'amplification étant fixé par une résistance 338 montée en contre-réaction entre la sortie 326 et l'entrée 333 de l'amplificateur 332.

En fonctionnement, les commutateurs K 321 et K 322 sont ouverts au début de la mesure. Celle-ci débute par la fermeture du commutateur K 321, ce qui provoque le passage brusque de la tension à la jonction 300 de la bobine 150 et de la résistance R 310 d'une valeur nulle à une valeur $U_1$. L'application de ce créneau de tension est suivi par un transitoire correspondant à l'établissement progressif du courant I dans la bobine 150 jusqu'à un instant $t_1$ (voir figures 9 et 10) où la tension de la jonction 300 se stabilise à une valeur égale à r I, lorsque la bobine est traversée par le courant continu imposé I.

Le commutateur K 322 est alors fermé au temps $t_1$, ce qui a pour effet de court-circuiter le circuit série formé par la résistance R 310 et la bobine 150, le courant I s'écoulant à travers la liaison de court-circuit 314. Il en résulte que la tension de la jonction 300 passe brusquement à une valeur négative - R I sous l'action de laquelle la selfinductance entre dans un régime transitoire de décharge sous l'action d'un courant qui tend à ramener la différence de potentiel entre ses bornes à une valeur nulle. Autrement dit, la mise en court-circuit du circuit R(310) et L (150) se traduit par l'application d'un créneau de tension aux bornes de la bobine 150 à partir de laquelle la tension à ces bornes rentre dans une phase transitoire.

Le gain du montage amplificateur 325 est choisi de telle sorte que la tension à l'entrée 306 du comparateur 304 corresponde à une fraction prédéterminée de la tension - RI de l'échelon de tension appliqué à la jonction 300 à l'instant $t_1$. Le gain du montage amplificateur 325 est en outre choisi pour que la tension - $\beta$ I soit négative. Ainsi, un signal 370 apparaît sur la sortie 305 (Vc) à l'instant $t_1$.

Lorsque le comparateur 304 détecte l'instant $t_2$ où la tension décroissante à la jonction 300 passe par la valeur - $\beta$ I, le signal 370 produit à sa sortie 305 s'annule, ce qui permet de mesurer l'intervalle $\Delta t$ séparant les instants $t_1$ et $t_2$, cet intervalle étant mesuré à l'aide d'un comptage d'impulsions d'horloge comme il est exposé ci-après.

L'intervalle $\Delta t = t_2 - t_1$ est relié à la valeur de la tension U (L, r)a à la jonction 300 par la relation

$$U (L, r) = R I \exp$$

FIG1/30

dans laquelle t est l'instant considéré au cours de l'évolution décroissante (en valeur absolue) de la tension U et L/R + r est la constante de temps du circuit série constitué par la bobine 150 et la résistance R 310 en série, R étant la valeur de cette dernière résistance.

A l'instant $t_2$, où U (L, r) est égal à - $\beta$ I, on peut écrire:

$$t_2 - t_1 =$$

6

FIG2/20

Dans ces relations, exp est la fonction exponentielle et Log représente la fonction logarithmique népérienne. On remarque que l'intervalle de temps $\Delta t$ est une fonction linéaire de la constante de temps L/R+r. Dans la mesure où l'on peut considérer les pertes d'amortissement magnétique dans le noyau 176 comme négligeables sur un large intervalle du déplacement du noyau 176, l'intervalle de temps mesuré $\Delta t$ est proportionnel à la self-inductance L qui est elle-même une fonction linéaire du déplacement du noyau 176 à l'intérieur de la bobine 150.

Ainsi, on obtient de façon très simple une mesure du degré d'enfoncement de la bobine en suivant la séquence d'opérations illustrées par les figures 9 et 10 et qui comprend à un premier instant $t_o$ l'application d'un échelon de courant au circuit résistance-bobine (R 310, L 150) connecté en série, puis, après stabilisation du courant dans la bobine 150, court-circuitage à un instant $t_1$ du circuit résistance bobine et mesure de l'intervalle de temps $\Delta t$ nécessaire pour que le courant à travers la bobine atteigne une fraction prédéterminée du courant initialement appliqué.

Avec une bobine comportant 1 300 spires et un barreau magnétique 176 dont les dimensions et la course ont été indiquées précédemment, la variation utile de la self-inductance L de la bobine 150 s'étend approximativement entre 2,5 millihenrys et 30 millihenrys. Un tel bobinage peut être obtenu aisément avec un fil de 0,08 millimètre de diamètre sur une carcasse métallique de 6 millimètres de diamètre, et de 25 millimètres de longueur.

Compte tenu de la résistance r de cette bobine qui varie en fonction de la température du cuivre constituant la bobine environ de 75 à 100 ohms (y compris la résistance équivalente aux pertes d'amortissement magnétique), on utilise dans cet exemple une valeur de résistance R 310 de 100 ohms. La constante de temps respective du circuit varie alors dans un intervalle de 15 microsecondes à environ 150 microsecondes, si l'on néglige pour l'instant l'influence des variations de température. Le courant produit par le générateur à courant constant I 316 peut être choisi à une valeur d'environ 10 milli-ampères. On remarque que cette valeur n'est nullement critique et est essentiellement fonction des possibilités de l'électronique de détection du comparateur 304. On note en particulier que des variations éventuelles du courant I en fonction de la température entre deux mesures distinctes éloignées dans le temps sont sans influence sur la précision de ces dernières, le temps $\Delta t$ mesuré correspondant à une décroissance relative du courant dans la bobine 150 et étant, par conséquent, indépendant de la valeur absolue de ce dernier. Par ailleurs, la durée $\Delta t$ est suffisamment brève pour qu'aucune variation de température susceptible de modifier la valeur du courant I ne puisse se produire dans cet intervalle.

La durée maximale dans cet exemple de l'intervalle $\Delta t$ est d'environ 100 microsecondes. L'intervalle de temps entre les instants $t_1$ et $t_0$, qui est nécessaire à l'établissement du courant I dans la bobine 150, n'est guère supérieur à environ 100 microsecondes.

Pour l'échelle de variation de la constante de temps indiquée, la durée de la mesure varie donc environ entre 1 microseconde et 100 microsecondes. On obtient une résolution de 200 points de mesure dans cet intervalle en utilisant une horloge de 2 MHz pour mesurer ces intervalles de temps par le comptage des impulsions d'horloge entre les instants $t_1$ et $t_2$.

On a vu que, si le temps mesuré est indépendant du courant employé pour la mesure, il est en revanche fonction de la valeur de la résistance r qui dépend elle-même de la température, laquelle peut varier dans des proportions considérables, entre la surface et le fond d'un puits souterrain, où elle peut atteindre les 160°C et même aller jusqu'à 175°C.

Afin d'effectuer une correction au premier degré, on prévoit un capteur de référence 400 (figure 3) comprenant une bobine identique à la bobine 150 dans laquelle un barreau magnétique identique au barreau 176 est bloqué dans une position longitudinale moyenne. Ce capteur de référence 400 est logé immédiatement au-dessus de la couronne de capteurs 100, à l'intérieur d'un perçage longitudinal 402 pratiqué dans la partie inférieure mâle 112 de l'élément de connexion 110, cette partie étant emmanchée à l'extrémité supérieure du corps de barillet 102. Ainsi, le capteur 400, qui est relié par un conducteur non représenté à la cartouche électronique 60, se trouve placé au voisinage immédiat de la couronne de capteurs 100 dans des conditions de température identiques. En conséquence, si l'on effectue une mesure de l'intervalle de temps $\Delta t$ pour ce capteur dans un espace de temps rapproché du relevé des mesures des capteurs 100, on peut obtenir un moyen de corriger les effets des variations de température sur les mesures des capteurs 100. A cet effet, la mesure du capteur 400 est transmise à la surface conjointement avec les mesures des capteurs 100. La correction correspondante est effectuée en surface.

Si N (20) et N'(20) sont respectivement les niveaux de compte correspondants aux intervalles de temps $\Delta t$ mesurés dans l'un des capteurs 100 et dans le capteur de référence 400 à la température de 20°C, et si N(100) et N'(100) sont les valeurs de ces intervalles de temps mesurées à 100°, la valeur mesurée N (100) peut être corrigée pour obtenir une valeur approchante de la mesure à 20° selon la relation:

FIG3/20

Cette relation fournit une correction exacte si la position d'enfoncement du noyau magnétique du capteur 100 est la même que celle du noyau magnétique dans le capteur 400. Cependant, on a vu que la résistance équivalente de perte par effet magnétique était fonction du degré d'enfoncement du barreau 176. En conséquence, la correction ainsi réalisée n'est qu'au premier degré pour l'intervalle de déplacement du noyau du capteur. Cependant, les essais effectués montrent que cette correction est tout à fait suffisante pour la précision indiquée sur les mesures de rayon effectuées par chaque palpeur. Lorsqu'on désire obtenir une précision plus grande, on peut effectuer une correction des effets de la température faisant intervenir des polynômes de correction préétablis à partir des mesures du capteur de référence et des mesures à corriger.

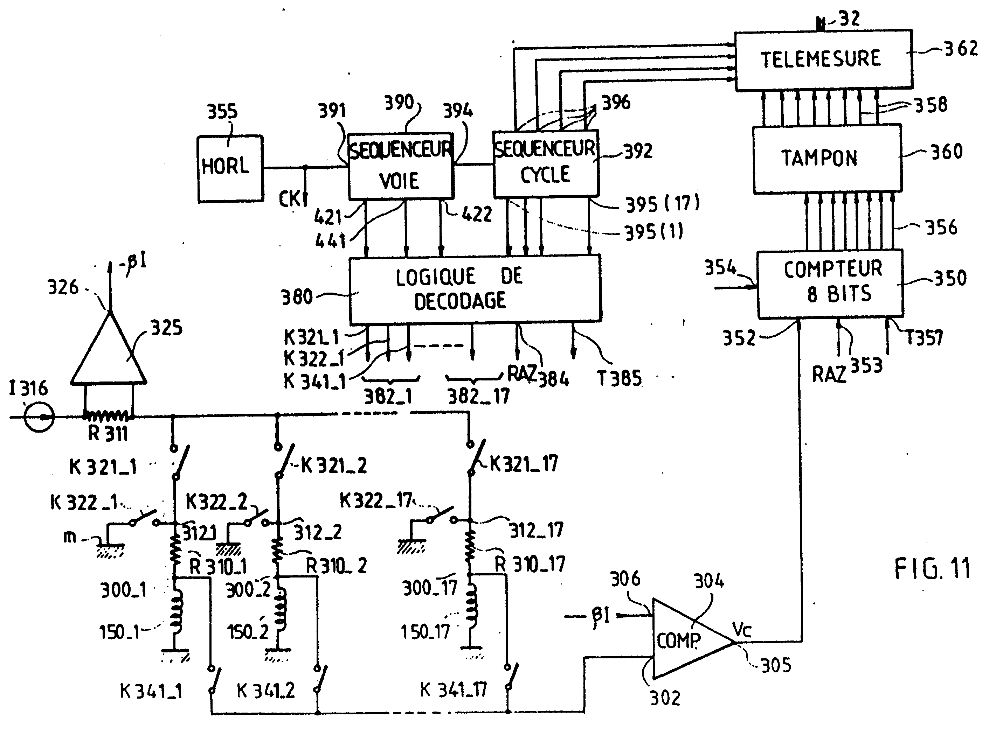

On a représenté à la figure 11, sous une forme légèrement modifiée, le schéma de circuit électrique associé à chacune des bobines respectivement 150-1, 150-2... 150-17 des seize capteurs 100 et du capteur 400 du dispositif avec leurs résistances associées R 310 -1 à R 310-17, les points de jonction respectifs 300-1 à 300-17 étant propres à être connectés sélectivement à l'entrée 302 du comparateur 304 par l'intermédiaire de commutateurs respectifs K 341-1, K 341-2 à K 341-17.

Les jonctions 312-1 à 312-17 peuvent être reliées à la masse par des liaisons de court-circuitage respectives à travers des commutateurs K 322-1 à K 322-17 et à la résistance R 311 montée en sortie du générateur de courant I 316 par une batterie de commutateurs en parallèle K 321-1 à K 321-17.

Comme précédemment, la tension aux bornes de la résistance R 311 est prélevée par l'amplificateur 325 dont la sortie 326 applique le signal de tension - $\beta$ I sur l'entrée 306 du comparateur 304.

La sortie 305 de ce comparateur 304 est connectée à une entrée de marche-arrêt 352 d'un compteur numérique à huit bits-350 alimenté par un signal impulsionnel C sur son entrée 354 en provenance d'un circuit d'horloge à 2 MHz 355. Le compteur 350 comprend huit sorties parallèles, une par bit, 356, qui sont connectées en parallèle aux entrées respectives d'un registre-tampon 360 qui maintient les valeurs de comptage qui lui sont transférées en provenance du compteur disponibles sur huit sorties de bits parallèles 355 en vue de leur transmission le long du câble électrique auquel est suspendue la sonde 30 par un dispositif de télémesure 362 logé également dans la cartouche 60.

Le compteur 350 comprend également une entrée de remise à zéro 353 et une entrée de transfert T 357 propre à valider la transmission du niveau de compte atteint entre un signal de marche et un signal d'arrêt sur son entrée 352 dans le registre-tampon 360 par les sorties 256.

En fonctionnement, les commutateurs K de même indice 1 à 17 sont commandés chacun au cours d'une séquence de mesure permettant de produire tour à tour, pour chacune des bobines 150-1 à 150-17, une période de charge entre un instant $t_0$ et un instant $t_1$ et une période de décharge entre des instants $t_1$ et $t_2$ la sortie 305 du comparateur produisant un créneau de tension $V_C$ entre les instants $t_1$ et $t_2$ (courbe 370 figure 10). On remarque qu'à l'instant $t_1$ la tension U (L, r) traverse brusquement le niveau de tension - $\beta$ I vers les valeurs négatives. Ce niveau est retraversé au cours de la décroissance exponentielle du courant de la bobine 150 à l'instant $t_2$. Le signal à la sortie 305 correspond donc à la durée de l'intervalle $\triangle$ t. Le compteur 350 se trouve excité pendant la durée de ce signal, la valeur comptée représentant ainsi une indication numérique de cette durée.

Ainsi, après le cycle de mesure sur la bobine 150-1 mettant en jeu les commutateurs K 321-1, K 322-1 et K 341-1, ces commutateurs sont tous ramenés à l'état ouvert et un cycle de mesure est entrepris sur la bobine 150-2 par excitation des commutateurs K 321-2, K 322-2 et K 341-2.

Les séquences de commutation sont commandées par une logique de décodage 380 qui possède 17 x 3 sorties de commande formant 17 groupes de 3 sorties de voies 382-1 à 382-17. Chaque groupe de sortie; de commande correspond à un cycle de mesure et comprend, par exemple pour le groupe 382-1, une sortie de commande du commutateur K 321-1, une sortie de commande du commutateur K 322-1 et une sortie de commande du commutateur K 341-1 selon la séquence nécessaire pour commander la mesure du déplacement dans la bobine 150-1. La logique 380 comprend également une sortie de remise à zéro 384 connectée à l'entrée de remise à zéro 353 du compteur 350 et une sortie de transfert T 385 connectée à l'entrée de transfert du compteur T 357 dont le rôle a été explicité précédemment.

La logique de décodage cst commandée à partir d'un circuit de séquenceur de voie 390 et d'un circuit de séquenceur de cycle 392. Ces deux circuits comprennent des compteurs, l'en trée 391 du circuit 390 étant connectée à la sortie du circuit d'horloge 355. Le circuit 390 est équipé de décodeurs des états de sortie de son compteur pour produire: sur une première sortie 421, connectée à une entrée respective de la logique 380, un signal correspondant à la fermeture des interrupteurs K 321 à l'instant $t_0$ début de chaque cycle; sur une sortie 441 connectée à une entrée respective de la logique de décodage, un signal de fermeture des commutateurs K 341 à un instant $t_1$; et sur une troisième sortie 422 également connectée à une entrée respective de la logique 380, un signal de commande des commutateurs K 322 au même instant $t_1$ de chaque séquence.

A la fin de chaque cycle de mesure sur une bobine, la sortie 394 du séquenceur 390 commande l'entrée du compteur de cycle 392, lequel possède 17 sorties 395-1 à 395-17 connectées à 17 entrées respectives de la logique de décodage pour autoriser le passage par cette dernière des signaux de commande 421, 441 et 422 aux commutateurs associes à la suivante. Le circuit séquenceur 392 comprend également une sortie de code binaire

0 082 772

à quatre bits parallèles 396 fournissant une indication numérique de l'adresse du capteur correspondant à celle des sorties 395-1 à 395-17 qui est excitée. Les bits d'adresse 396 sont transmis au circuit de télémesure 362 pour la formation d'un message sur le câble 32 associant à chaque capteur (bobines 150-1 à 150-17), la valeur numérique N de l'intervalle de temps $\Delta t$ mesuré correspondant.

Ainsi, la mesure du déplacement du barreau dans chaque bobine se fait, selon l'invention, d'une manière séquentielle pour obtenir directement une indication numérique variant pratiquement linéairement avec le déplacement correspondant. En outre, on utilise ce caractère discontinu de la mesure pour effectuer une interrogation séquentielle de chaque capteur. Une telle séquence de mesure est bien adaptée dans le cas notamment d'une sonde suspendue à un câble dans lequel la transmission des données de mesure s'effectue en série. En outre, dans le cas d'une sonde destinée à être descendue dans un puits à travers des tubes de diamètre étroit, on économise de l'espace en utilisant une seule électronique de mesure (comparateur 304, amplificateur 325) et de comptage du temps (compteur 350). Le caractère séquentiel du fonctionnement de chaque bobine présente en outre l'avantage d'éliminer toute diaphonie par couplage magnétique entre les bobines 150-1 à 150-16.

Les organes de mesure proprement dits, c'est-à-dire les bobines avec leurs noyaux ou barreaux associés sont d'une grande simplicité. On a en effet réalisé un capteur de déplacement qui comprend une seule bobine fonctionnant à l'aide d'un circuit très simple ne nécessitant ni capacité ni dispositif d'oscillateur, et qui présente le mérite de fournir une réponse linéaire aux déplacements relatifs du barreau magnétique et de la bobine. Cette linéarité de variation est obtenue sur une fraction importante de la plage de déplacement des capteurs. Le signal obtenu est directement présenté sous une forme numérique, ce qui offre dans de nombreux cas des avantages en vue d'un traitement d'une transmission ultérieure des données de la mesure. On remarque en outre que ce capteur permet d'effectuer de telles mesures séquentielles à une fréquence qui est relativement élevée, dans l'exemple choisi au moins supérieure à 500 Hz. Ceci permet, notamment dans le cas où l'on désire des mesures séquentielles sur plusieurs capteurs, d'explorer toutes les voies de mesure en un temps relativement faible. Dans le cas d'une sonde, ce temps est notamment tout à fait compatible avec une densité de mesure acceptable en fonction de la profondeur. A titre d'exemple, avec une sonde qui est remontée dans un tube à une vitesse de 30 centimètres par seconde, le nombre de mesures fournies par chaque palpeur, c'est-à-dire sur chacune des seize génératrices du tube examiné, est légèrement inférieur à 1 mesure par centimètre.

Le capteur de déplacement qui vient d'être décrit offre, outre sa rusticité propre, l'avantage que les mesures effectuées sont pratiquement indépendantes des variations du courant de mesure en fonction de la température. Il se prête en outre aisément à une corréction des valeurs de mesure relevées en fonction de la température d'utilisation, ce qui est précieux dans le cas d'une sonde propre à être descendue dans un puits le long duquel les variations de température sont considérables.

Dans le cadre de l'application d'un tel capteur de déplacement à la réalisation d'une sonde de diamétreur, il permet, en raison de son faible encombrement, de monter un nombre élevé de palpeurs autour du corps de la sonde avec son capteur correspondant. En outre, notamment par rapport à des propositions de l'art antérieur, un tel capteur de déplacement nécessite le passage d'un seul fil par bobine en direction de la cartouche électronique, ne présente pas de problème de variation des caractéristiques de la mesure en fonction de la fréquence et permet des mesures séquentielles à fréquence élevée en raison du temps de stabilisation très bref nécessité par l'établissement du courant imposé dans la bobine et précédant la mesure proprement dite.

Enfin, de tels capteurs de déplacement sont particulièrement bien adaptés à une réalisation de sonde de diamétreur, notamment pour des mesures dans les puits, dans lesquelles les noyaux des capteurs sont constitués par des barreaux de matériau magnétique massif à forte perméabilité et mobiles à l'intérieur d'une pièce en forme de doigt de gant qui est exposée à la pression externe, laquelle peut varier dans des proportions importantes, tandis que la bobine peut être logée dans un faible volume autour de ladite pièce en doigt de gant. On a ainsi réalisé un ensemble de diamétreurs comprenant un très grand nombre de capteurs avec un minimum de parties mobiles, et combinant une bonne fiabilité de fonctionnement avec une précision convenable.

## Revendications

1. Dispositif de mesure de dimensions internes d'un tube, notamment dans un puits, comprenant un corps de sonde (51) allongé propre à être déplacé dans ce tube, une pluralité de palpeurs (54) montés mobiles par rapport à ce corps de sonde en fonction des variations de dimensions transversales internes du tube lorsque le corps de sonde est déplacé à l'interieur de celui-ci et, pour chacun de ces palpeurs, un capteur de déplacement (100) propre à fournir une mesure électrique des déplacements correspondants et comprenant un tube borgne (136) monté dans le corps de sonde, un organe mobile (176) comportant un barreau en matériau magnétique pénétrant à l'intérieur du tube borgne (136) et un moyen de détection à bobine électrique (150) montée autour du tube et sensible aux variations de la position de cet organe mobile à l'intérieur du tube borgne, des moyens de transmission (96) étant prévus pour transformer les mouvements du palpeur correspondant audit capteur en déplacements dudit organe mobile (176) à l'intérieur du tube borgne (136), ledit dispositif étant caractérisé en ce que ledit tube borgne (136) de chaque capteur de déplacement (100) est monté de façon étanche dans le corps de sonde de telle façon que son espace intérieur (172) soit soumis à la pression régnant à l'extérieur de ce corps de sonde et qu'une partie au moins de son espace extérieur (146) soit soustrait à cette pression, et en ce que les

**0 082 772**

tubes borgnes (136) des capteurs sont emmanchés de façon étanche dans des trous longitudinaux d'un barillet (102) massif, solidaire du corps de sonde (51), leurs extrémités (138) ouvertes formant une couronne dans une des faces extrêmes (135) du barillet.

2. Dispositif selon la revendication 1, caractérisé en ce que les extrémités fermées des tubes borgnes (136) pénètrent chacune dans une alvéole individuelle (146) pratiquée dans le corps du barillet massif (102) dans laquelle est logée la bobine (150) autour de l'extrémité du tube borgne (136) correspondante.

3. Dispositif selon l'une des revendications 1 et 2, caractérisé en ce que lesdits moyens de transmission comprennent un dispositif à pompe (182) propre à soustraire ledit organe mobile à des efforts transversaux par rapport à sa direction de déplacement dans le tube borgne correspondant.

4. Dispositif selon l'une des revendications 1 à 3, caractérisé en ce que lesdits moyens de transmission sont montés entre chaque palpeur et chaque capteur dans un canal longitudinal ménagé à l'intérieur du corps de sonde (51) qui est relié à l'extérieur de ce dernier par des passages (174) à ses extrémités inférieure et supérieure, cette dernière se trouvant à proximité immédiate de l'ouverture du tube borgne (136) dans lequel pénètre l'organe mobile (176) correspondant.


**Patentansprüche**

1. Vorrichtung zum Messen der Innenabmessungen eines Rohres, insbesondere in einem Bohrloch, umfassend einen langgestreckten Sondenkörper (51), der in diesem Rohr verlagerbar ist, eine Mehrzahl von Tastern (54), die relativ zu diesem Körper beweglich montiert sind in Abhängigkeit von Veränderungen der inneren Querabmessungen des Rohres, wenn der Sondenkörper im Inneren desselben verlagert wird, und, für jeden dieser Taster, einen Verlagerungsaufnehmer (100), ausgebildet zum Liefern einer elektrischen Messung der entsprechenden Verlagerungen und umfassend eine an einem Ende geschlossene, in dem Sondenkörper angeordnete Röhre (136), ein bewegliches Organ (176) mit einem in das Innere der Röhre (136) eindringenden Stab aus magnetischem Material und ein Detektormittel mit elektrischer Wicklung (150), die um die Röhre angeordnet ist und empfindlich ist gegenüber Veränderungen der Position dieses beweglichen Organs im Inneren der Röhre, wobei Übertragungsmittel (96) vorgesehen sind für die Umsetzung der Bewegungen des dem genannten Aufnehmer zugeordneten Tasters in eine Verlagerung des genannten beweglichen Organs (176) im Inneren der Röhre (136), welche Vorrichtung dadurch gekennzeichnet ist, daß die genannte an einem Ende verschlossene Röhre (136) jedes Verlagerungsaufnehmers (100) abgedichtet in dem Sondenkörper derart angeordnet ist, daß ihr Innenraum (172) dem Druck ausgesetzt ist, welcher außerhalb dieses Sondenkörpers herrscht, und mindestens ein Teil ihres Außenraumes (146) von diesem Druck entlastet ist, und daß die am einen Ende geschlossenen Röhren (136) der Aufnehmer abgedichtet in Längsbohrungen eines massiven, mit dem Sondenkörper (51) verbundenen Trommelkörpers (102) eingefügt sind, wobei ihre offenen Enden (138) eine Krone in einer der Endflächen (135) des Trommelkörpers bilden.

2. Vorrichtung nach Anspruch 1, dadurch gekennzeichnet, daß die geschlossenen Enden der einseitig geschlossenen Röhren (136) jeweils in eine einzelne Ausnehmung (146) ragen, die in den massiven Trommelkörper (102) eingearbeitet sind, und in denen die Wicklung (150) um das Ende der entsprechenden Röhre (136) angeordnet ist.

3. Vorrichtung nach einem der Ansprüche 1 und 2, dadurch gekennzeichnet, daß die genannten Übertragungsmittel eine Pumpenanordnung (182) umfassen, ausgebildet zum Entlasten des genannten beweglichen Organs bezüglich Querkraften relativ zu seiner Verlagerungsrichtung in der entsprechenden am einen Ende geschlossene Röhre.

4. Vorrichtung nach einem der Ansprüche 1 bis 3, dadurch gekennzeichnet, daß die genannten Übertragungsmittel zwischen jedem Taster und jedem Aufnehmer in einem Längskanal angeordnet sind, der in das Innere des Sondenkörpers (51) eingearbeitet ist, und der mit dem Äusseren des letzteren über Passagen (174) an seinem unteren und oberen Ende verbunden ist, wobei sich dieses letztere in unmittelbarer Nähe der Öffnung der am einen Ende geschlossenen Röhre (136) befindet, in die das entsprechende bewegliche Organ (176) eindringt.


**Claims**

1. A device for measuring the internal dimensions of a tube, especially in a well, comprising an elongate sonde body adapted to be moved in the tube, a plurality of feelers (54) mounted to move transverse internal dimensions of the tube while the sonde body is moved within the tube, and, for each of these feelers, a displacement transducer adapted to supply an electrical measurement of the corresponding displacements and comprising a blind tube (136) mounted in the sonde body, a movable member (176) comprising a bar of magnetic material penetrating the interior of the blind tube (136) and a detection means in the form of an electric coil mounted around the tube and responsive to variations of the position of the movable member within the blind tube, transmission means (96) being provided to transform the movements of the feeler corresponding to (176) within the blind tube (136), said device being characterised in that said blind tube (136) of each displacement transducer is mounted in a sealed manner in the sonde body in such a manner that its interior space (172) is subjected to the pressure prevailing at the exterror of the sonde body and that at least a part of its exterior space is shielded from this pressure, and in that the blind tubes (136) of the transducers are encased in a sealed manner in longitudinal holes in a solid drum (102), rigidly secured to the sonde body (51), their open ends (138) forming an annulus in one of the end faces of this drum.

2. A device accocding to claim 1, characterised in that the closed ends of the blind tubes (136) each penetrate into an individual cavity (146) bored into the body of the solid drum (102), in which cavity the coil (150) around the end of the corresponding blind tube (136) is accommodated.

3. A device according to either of claims 1 and 2, characterised in that said transmission means comprise a pump device (182) adapted to protect said movable member from forces transverse to its direction of movement in the corresponding blind tube.

4. A device according to any one of claims 1 to 3, characterised in that said transmission means are mounted between each feeler and each transducer in a longitudinal channel provided within the sonde body (51), which channel is connected to the exterior of this latter by passages (174) at its lower and upper ends, this latter passage being located in the immediate proximity of the opening of the blind tube (136) in which the corresponding movable member penetrates.

FIG. 1

FIG. 2

FIG. 3

0 082 772

1

# FIG.4    FIG.5    FIG.6

# FIG.7

# FIG.8

# FIG. 9

# FIG.10

FIG. 11

0 082 772